# EUROPEAN PATENT APPLICATION

(11) **EP 1 816 853 A2**
(43) Date of publication of application: **08.08.2007**
(21) Application number: 07290058.2
(22) Date of filing: 16.01.2007
(51) Int. Cl.: H04N 5/00

(54) **Method for managing the option of user's preferences in a broadcast receiver capable of receiving data broadcasting and broadcast receiver for controlling the class/interface structure**

(30) Priority: 01.02.2006 KR 20060009834
(71) Applicant: LG Electronics Inc., Youngdungpo-Gu Seoul (KR)
(72) Inventor: Park, Tae Jin, B-302, Gungjeon Villa, Seongnam-si, Gyeonggi-do 461-824 (KR)
(74) Representative: Loisel, Bertrand

(57) **Abstract**

A method for managing a user's preference option in a broadcast receiver receiving data broadcasting, a class/interface structure for controlling the same, and a broadcasting receiver for controlling the class/interface receiver can solve a problem encountered when a data broadcast-associated application partially overlaps with a Native application. A method comprising the steps of: receiving a request for setting a function, wherein the function is supported by at least one of a data broadcast-associated application and an application native to a broadcast receiver; accessing setting authority information in response to the request; and storing data associated with the function based on the setting authority information.

## Description

This application claims the benefit of Korean Patent Application No. 10-2006-0009834, filed on February 1, 2006, which is hereby incorporated by reference as if fully set forth herein.

### BACKGROUND OF THE INVENTION

### Field of the Invention

The present invention relates to a data broadcasting, and more particularly to a method for controlling a user's preference option of a broadcast receiver capable of receiving data broadcasting, a class/interface structure for implementing the control method, and a broadcast receiver for processing the class/interface structure. Discussion of the Related Art

In recent times, many developers have conducted intensive research into a data broadcast service for digital broadcasting.

If the data broadcast service is made commercially available, a user can experience a variety of contents via a TV at home.

Generally, a set-top box capable of receiving data broadcast signals and a broadcast receiver (e.g., a DTV, etc.) equipped with such a set-top box have been designed to receive the data broadcast signals, terrestrial broadcast signals, and input signals of Composite/S-Video/Component/RGB/HDMI/DVI/IEEE1394.

In the meantime, the above-mentioned broadcast receiver includes a variety of image-quality setup functions (e.g., a brightness, a contrast, and a sharpness), and also includes other functions (e.g., an aspect ratio function, an audio language function, a caption function, an automatic On/Off function, and a parental control function, etc.)

However, the above-mentioned image-quality setup functions are not usually defined by the data broadcast-associated application, but other functions may be provided from the above-mentioned data broadcast-associated application or the Native application.

In other words, the data broadcast-associated application and the Native application may be supplied to some parts of the above-mentioned functions of the broadcast receiver. Otherwise, the data broadcast-associated application may not be supported by some parts of the above-mentioned functions of the broadcast receiver, whereas the Native application is supported by the same.

However, if a conventional broadcast specification is applied to the broadcast receiver including a set-top box capable of receiving the data broadcast signals, the following problems occur.

Firstly, if the broadcast receiver has a specific function capable of supporting both the data broadcast-associated application and the Native application, it is unclear which application establishes/executes the above-mentioned specific function, such that an unexpected error may be unavoidably displayed for a user.

For example, it is assumed that the aspect ratio setup function is supported by the above-mentioned data broadcast-associated application and the Native application. In this case, a method for setting the aspect ratio via the data broadcast-associated application may be slightly different from a method for setting the aspect ratio via the Native application, or may also be quite different from the method for setting the aspect ratio via the Native application.

In other words, an aspect ratio setup image of a GUI (Graphical User Interface) of the Native application supports a variety of setup functions (e.g., an Auto function, a 4:3-ratio function, a 16:9-ratio function, a Zoom1 function, a Zoom2 function, a Horizon function, and a Cinema Zoom function). However, the data broadcast-associated application transmitted from a broadcast station may support only two options (i.e., the 4:3-ratio function and the 16:9-ratio function) to perform the aspect ratio setup on the GUI image.

Also, although two options are identical with each other, they may use quite different terminologies. For example, a GUI menu image of the Native application uses the terminology of "4:3 ratio", but a GUI menu image of the data broadcast-associated application may use another terminology of "Standard". A GUI menu image of the Native application uses the terminology of "16:9 ratio", but a GUI menu image of the data broadcast-associated application may use another terminology of "Full Screen".

In this case, a user of the broadcast receiver may have difficulty in establishing a desired aspect ratio.

For example, provided that the aspect ratio is set to the ratio of 4:3 via the Native application, and the other aspect ratio is set to the ratio of 16:9 via the data broadcast-associated application, it is difficult for the user to check which one of references is applied to the aspect ratio change operation.

Secondly, if the broadcast receiver has a specific function capable of supporting the Native application whereas it does not support the data broadcast-associated application, the user may misunderstand that the above-mentioned broadcast receiver was out of order.

For example, if it is expected that a specific function will be supported by the data broadcast-associated application (but, in fact, the specific function is not supported by the data broadcast-associated application) and the above-mentioned specific function is not supported by the Native application during a data broadcast output mode, the above-mentioned specific function is normally operated in other output modes (e.g., a terrestrial broadcast mode, a Video-1 mode, and a Video-2 mode, etc.), but it is not operated in the data broadcast output mode.

In this case, the above-mentioned specific function is not operated in the data broadcast mode, resulting in greater inconvenience of the user.

### SUMMARY OF THE INVENTION

Accordingly, the present invention is directed to a method for managing the option of user's preference in a broadcast receiver capable of receiving data broadcasting, a class/interface structure for controlling the same, and a broadcast receiver for controlling the class/interface structure that substantially obviate one or more problems due to limitations and disadvantages of the related art.

An object of the present invention is to provide a method for managing the option of user's preference in a broadcast receiver capable of receiving data broadcasting, a class/interface structure for controlling the same, and a broadcast receiver for controlling the class/interface structure, which provide a specific function with the data broadcast-associated application and the Native application, establish/apply the specific function even when only the Native application is supported, and prevent an unexpected error from being generated.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method comprising the steps of: receiving a request for setting a function, wherein the function is supported by at least one of a data broadcast-associated application and an application native to a broadcast receiver; accessing setting authority information in response to the request; and storing data associated with the function based on the setting authority information.

In another aspect of the present invention, there is provided a method comprising the steps of:
receiving a request for applying a function, wherein the function is supported by at least one of a data broadcast-associated application and an application native to a broadcast receiver; accessing applying authority information in response to the request; and
applying data associated with the function based on the applying authority information.

In yet another aspect of the present invention, there is provided a broadcast receiver comprising: a controller configured to receive a request for setting a function, wherein the function is supported by at least one of a data broadcast-associated application and an application native to a broadcast receiver; the controller further configured to access setting authority information in response to the request; and the controller further configured to store data associated with the function based on the setting authority information.

In yet another aspect of the present invention, there is provided a broadcast receiver comprising: a controller configured to receive a request for applying a function, wherein the function is supported by at least one of a data broadcast-associated application and an application native to a broadcast receiver; the controller further configured to access applying authority information in response to the request; and the controller further configured to apply data associated with the function based on the applying authority information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptional diagram of a cable broadcast network including a host and a cable card;

FIG. 2 is a structural diagram illustrating a relationship between software and hardware units of a broadcast receiver equipped with a data broadcast-associated application platform;

FIG. 3 shows an example of a User Preference Table according to the present invention;

FIG. 4A shows another example of a User Preference Table according to the present invention;

FIG. 4B shows still another example of a User Preference Table according to the present invention;

FIG. 4C shows still another example of a User Preference Table according to the present invention;

FIG. 4D shows still another example of a User Preference Table according to the present invention;

FIG. 4E shows still another example of a User Preference Table according to the present invention;

FIG. 4F shows still another example of a User Preference Table according to the present invention;

FIG. 4G shows still another example of a User Preference Table according to the present invention;

FIG. 4H shows still another example of a User Preference Table according to the present invention;

FIG. 4I shows still another example of a User Preference Table according to the present invention;

FIG. 4J shows still another example of a User Preference Table according to the present invention;

FIG. 4K shows still another example of a User Preference Table according to the present invention;

FIG. 5 shows still another example of a User Preference Table according to the present invention;

FIG. 6 shows still another example of a User Preference Table according to the present invention;

FIG. 7 is a flow chart illustrating a method for controlling a user's preference option of a broadcast receiver capable of receiving broadcast data according to the present invention; and

FIG. 8 is a block diagram illustrating a broadcast receiver equipped with a user's preference option control function according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Conventionally, if a data broadcast-associated application function partially overlaps with a Native application function, or if the data broadcast-associated application function and the Native application are partially deleted, an unexpected error may occur, or a specific function may not be implemented at a data broadcast mode. However, the present invention can solve the above-mentioned problems.

For a brief description of the present invention, the present invention is classified into a first preferred embodiment, a second preferred embodiment, a third preferred embodiment, a fourth preferred embodiment, a fifth preferred embodiment, and a sixth preferred embodiment.

The first preferred embodiment describes a User Preference Table and an AppUserPreference (application user preference) Library, which are newly defined by the present invention, according to the present invention.

The second preferred embodiment describes a method for constructing the User Preference Table according to the present invention.

The third preferred embodiment describes the AppUserPreference Library for controlling the User Preference Table according to the present invention.

The fourth preferred embodiment describes an example of a Method of the AppUserPreference Library according to the present invention.

The fifth preferred embodiment describes a time-dependent control method for a broadcast receiver according to the present invention.

The sixth preferred embodiment describes a detailed description of the broadcast receiver according to the present invention.

[First Preferred Embodiment]

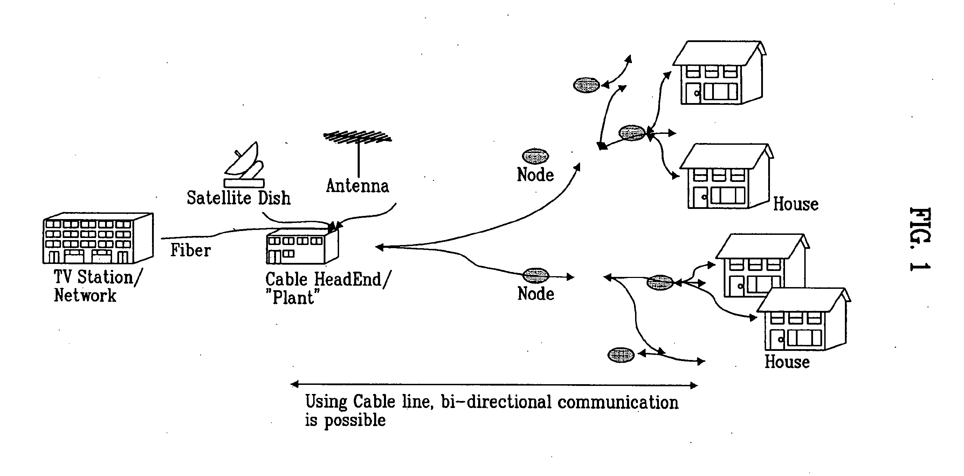

FIG. 1 is a conceptional diagram of a cable broadcast network including a host and a cable card.

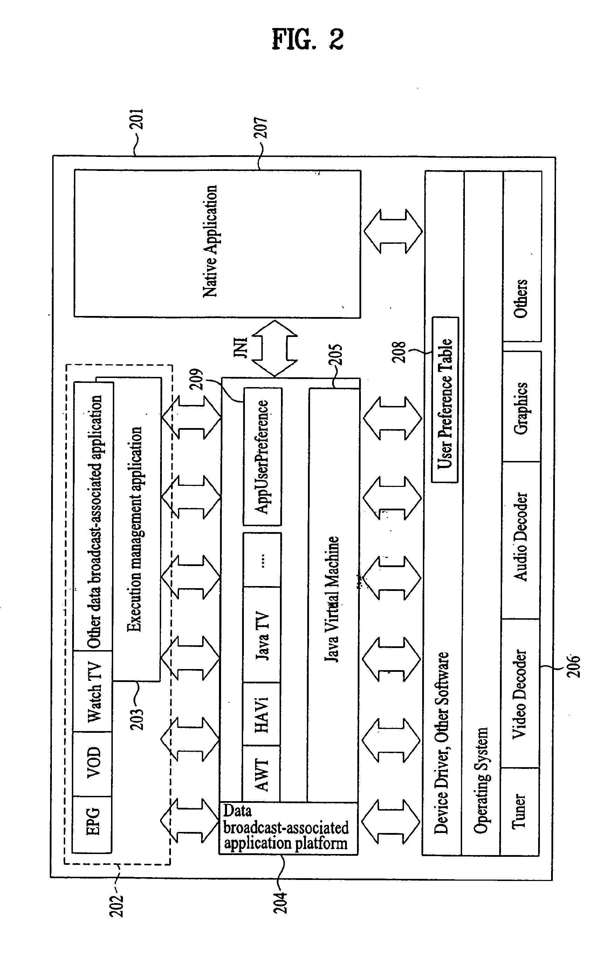

FIG. 2 is a structural diagram illustrating a relationship between software and hardware units of a broadcast receiver equipped with a data broadcast-associated application platform.

Referring to FIG. 1, a cable headend or plant can receive broadcast signals via various communication networks from a television broadcasting station. The television broadcasting station has at least one server which includes various information related to the present invention such as a descriptor and data. The cable headend delivers a cable broadcast to a cable broadcast receiver via a network including nodes.

A host and a cablecard can tranmit/receive signals to/from the cable headend. In this case, the corresponding transmission is achieved via a cable network capable of transferring data bi-directionally.

The host can be connected to various interfaces including a digital television, a DVD player, a digicam, a set-top box and the like.

The User Preference Table and the AppUserPreference Library according to the present invention will hereinafter be described with reference to FIG. 2. Detailed descriptions thereof will be described later with reference to other preferred embodiments other than the first preferred embodiment.

Referring to FIG. 2, the broadcast receiver 201 (e.g., a digital TV (DTV), etc.) equipped with a data broadcast-associated application platform includes a data broadcast-associated application 202, a data broadcast-associated application platform 204, a Native application 207, and a hardware unit 206 for operating the above-mentioned applications, etc.

However, the above-mentioned data broadcast-associated application platform 204 may exemplarily correspond to an Open Cable Application Platform (OCAP), etc. The above-mentioned data broadcast-associated application may exemplarily correspond to the OCAP application.

For the convenience of description and better understanding of the present invention, it is assumed that the data broadcast-associated application 202 is the OCAP application in not only the following first preferred embodiment but also other preferred embodiments.

Therefore, the present invention is not limited to the OCAP data broadcast specification, and can also be applied to other data broadcast specifications. The above-mentioned fact is obvious to those skilled in the art in light of the appended claims and their equivalents.

For example, the present invention can also be applied to a cable broadcast service, a terrestrial broadcast service, and a satellite broadcast service.

The first to sixth preferred embodiments of the present invention will exemplarily describe a specific situation that broadcast data is received via the cable broadcast service.

The hardware unit 206 has been previously established by a TV manufacturer, etc. The hardware unit 106 includes a tuner, a video decoder, an audio decoder, and a graphics unit (e.g., an On Screen Display (OSD)). Furthermore, the operating system is contained in the hardware unit 206.

A Device Driver for operating the hardware unit 206, Other Software part, and a data broadcast-associated application platform 204 are contained in the above-mentioned operating system. In addition, the above-mentioned Native application 207 is mounted in the operating system.

The above-mentioned data broadcast-associated application platform 204 includes a Java virtual machine 205 for executing a Java program. A variety of software modules (e.g., AWT, HAVi, and JavaTV, etc.) are placed on the data broadcast-associated application platform 204.

In the meantime, the data broadcast-associated application 202 downloaded from a broadcasting station to the broadcast receiver 201 is operated on the Java virtual machine 205, and controls the hardware unit 206 (e.g., the tuner, and the video decoder, etc.).

In other words, the function of the data broadcast-associated application 202 is limited by a class library (e.g., AWT, and HAVi, etc.) of the above-mentioned data broadcast-associated application platform 204. In fact, most hardware units of the broadcast receiver 201 can be controlled by the class library.

For example, the class library may correspond to a Java class package, etc.

In the meantime, the above-mentioned data broadcast-associated application 202 may include an execution management application 203, an EPG, a VOD, and a Watch TV, etc.

In this case, the above-mentioned execution management application 203 is an initially-executed application for the broadcast receiver, and serves as a manager of the data broadcast-associated application 202 capable of executing/deleting other data broadcast-associated applications. In other words, the above-mentioned execution management application 203 is the principal program including a policy of a data broadcast enterprise.

For example, the execution management application 203 may correspond to the monitor application, etc.

The EPG may include not only a TV guide function but also characteristics of a Watch TV program capable of executing the principal functions (e.g., channel Up/Down functions, etc.) of the broadcast receiver. Furthermore, a Pay-Per-View service may be executed by the above-mentioned EPG.

The Watch TV is indicative of a program capable of executing basic operations for allowing a user to view TV programs, and has functions similar to those of conventional Native application 207.

The VOD (Video-On-Demand) performs a general VOD function. For example, the VOD executes a RVOD (Real VOD) and a Near VOD (NVOD), etc. If a hardware disc exists, the VOD may be implemented with the hard disc.

The Native application 207 is not a program transmitted/downloaded by a broadcast station as in the data broadcast-associated application 202, but a specific program for executing basic functions of the broadcast receiver 201. The Native application 207 is indicative of a basic program established by a manufacturer of the broadcast receiver 201.

In the meantime, the Native application 207 may communicate with the data broadcast-associated application platform 204 and the data broadcast-associated application 202.

For example, the Native application 207 may communicate with the data broadcast-associated application platform 204 and the data broadcast-associated application 202 using a Java Native Interface (JNI).

The JNI is an interface required when a program written by Java language uses a software program written in C or C++ language, or a software program written in C or C++ language uses a software program written in Java language. The JNI is supported by the Java virtual machine 205.

Specifically, according to the present invention, a User Preference Table 208 is stored in a memory (not shown) of the hardware unit 206, and the AppUserPreference Library 209 is added to the data broadcast-associated application platform 204. However, the term "User Preference Table" 208 and the term "AppUserPreference" 209 are disclosed for only illustrative purposes, such that the User Preference Table 208 and the AppUserPreference 209 must be understood according to the following description.

The broadcast receiver 201 equipped with the data broadcast-associated application platform 204 allows a user to select one of a terrestrial broadcast mode (Antenna), a cable broadcast mode (Cable), a Video-1 mode (Video 1), and a Video-2 mode (Video 2) using a TV/Video button contained in a remote-controller or local key.

In association with the above-mentioned selected input mode and the setup/execution of the specific function, the data broadcast-associated application 202 or the Native application 207 are operated.

However, the User Preference Table 208 and the AppUserPreference library 209 are additionally defined to arbitrate the data broadcast-associated application 202's function and the Native application 207's function.

The User Preference Table 208 includes category information of functions supported by individual applications, a variety of preferred embodiments of the above-mentioned functions, applications capable of setting the above-mentioned functions, and application information to which the above-mentioned functions can be applied.

The above-mentioned User Preference Table 208 will be described with reference to the following second

### preferred embodiment.

In the meantime, the User Preference Table 208 may be stored in a Synchronous Dynamic Random Access Memory (SDRAM) or a flash memory. If the User Preference Table 208 is stored in the SDRAM, content data of the table 208 is reconstructed by the negotiation between the data broadcast-associated application 202 and the Native application 207 whenever the booting of the broadcast receiver 201 is executed.

If the User Preference Table 208 is stored in the flash memory, there is no need to perform the negotiation between the data broadcast-associated application 202 and the Native application 207 and to reconstruct the User Preference Table 208 whenever the booting of the broadcast receiver 201 is executed.

If a new data broadcast-associated application 202 is downloaded by a changed version of the data broadcast-associated application 202, the negotiation between the data broadcast-associated application 202 and the Native application 207 is required, and the User Preference Table 208 must be re-established.

In order to allow the data broadcast-associated application 202 to access the User Preference Table 208, a new library must be supplied to the data broadcast-associated application platform 204, and the AppUserPreference library 209 must be added to the data broadcast-associated application as the above-mentioned new library.

In other words, the above-mentioned AppUserPreference library 209 may be considered to be a library for allowing the data broadcast-associated application 202 (such as the execution management application 203) to access the User Preference Table 208.

The above-mentioned AppUserPreference library 209 will be described with reference to the following third and fourth preferred embodiments.

[Second Preferred Embodiment]

FIG. 2 is a structural diagram illustrating a relationship between software and hardware units of a broadcast receiver equipped with a data broadcast-associated application platform.

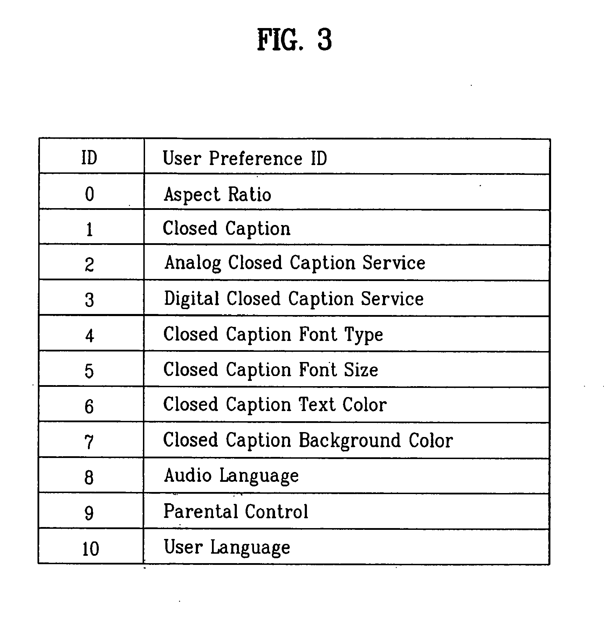

FIG. 3 shows an example of a User Preference Table according to the present invention.

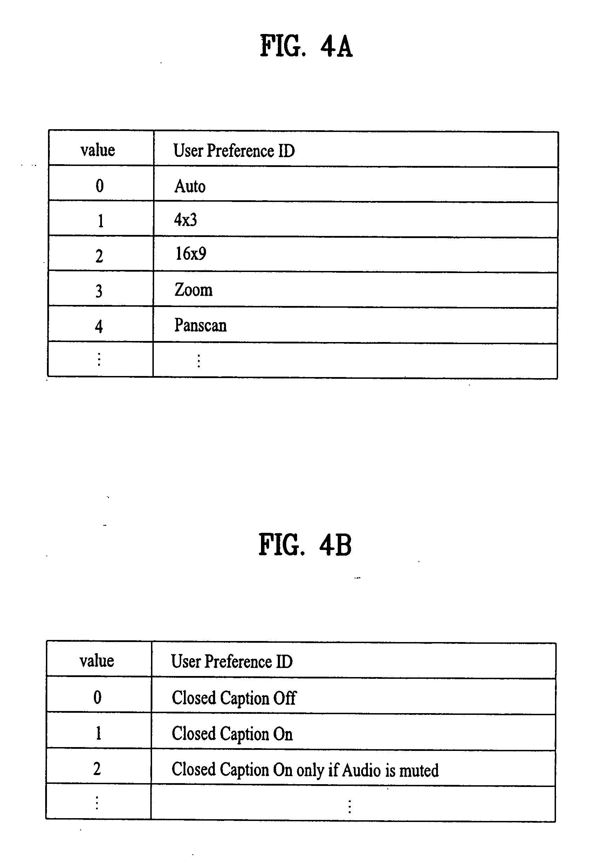

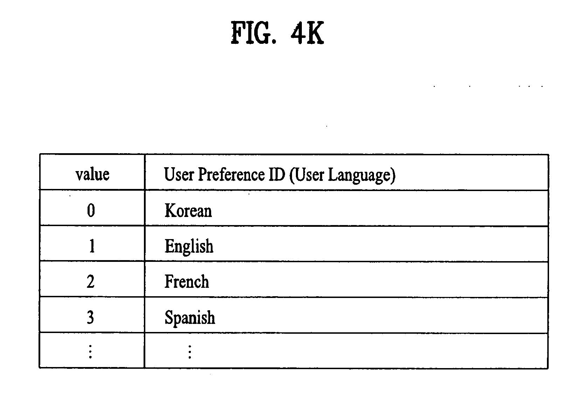

FIG. 4A shows another example of a User Preference Table according to the present invention.

FIG. 4B shows still another example of a User Preference Table according to the present invention.

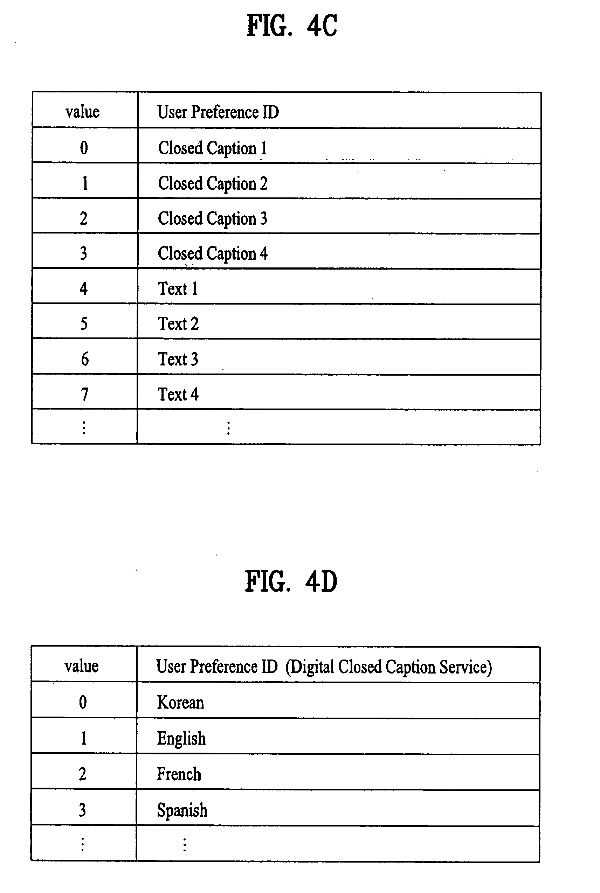

FIG. 4C shows still another example of a User Preference Table according to the present invention.

FIG. 4D shows still another example of a User Preference Table according to the present invention.

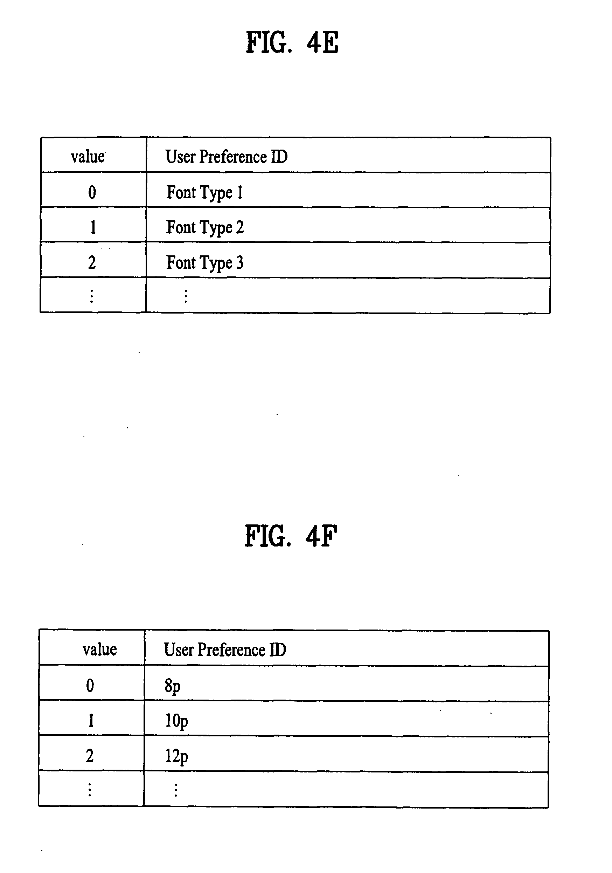

FIG. 4E shows still another example of a User Preference Table according to the present invention.

FIG. 4F shows still another example of a User Preference Table according to the present invention.

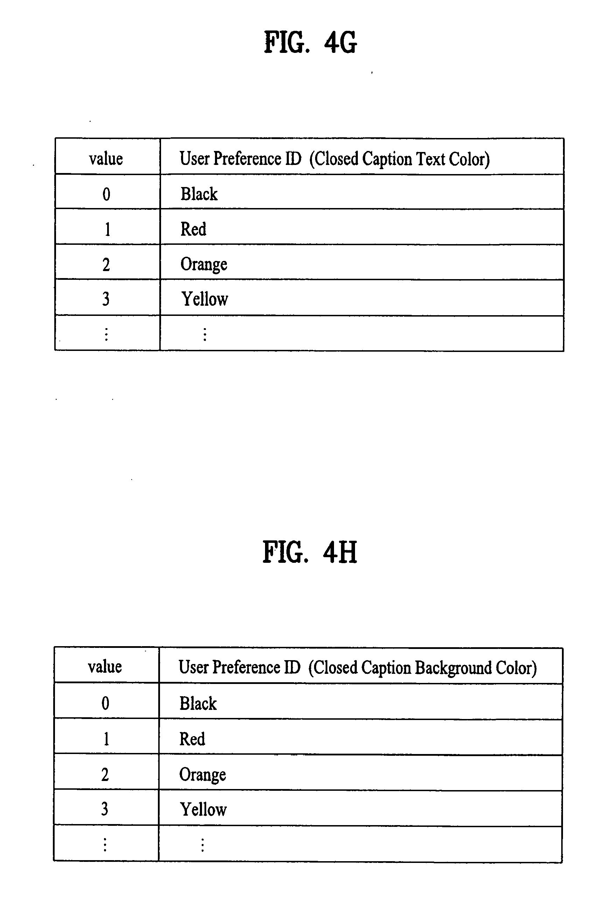

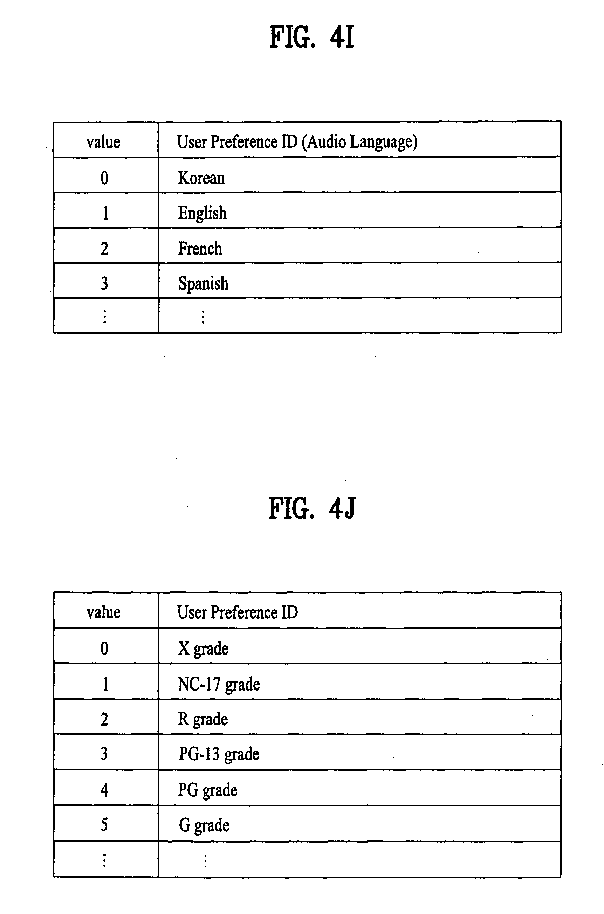

FIG. 4G shows still another example of a User Preference Table according to the present invention.

FIG. 4H shows still another example of a User Preference Table according to the present invention.

FIG. 4I shows still another example of a User Preference Table according to the present invention.

FIG. 4J shows still another example of a User Preference Table according to the present invention.

FIG. 4K shows still another example of a User Preference Table according to the present invention.

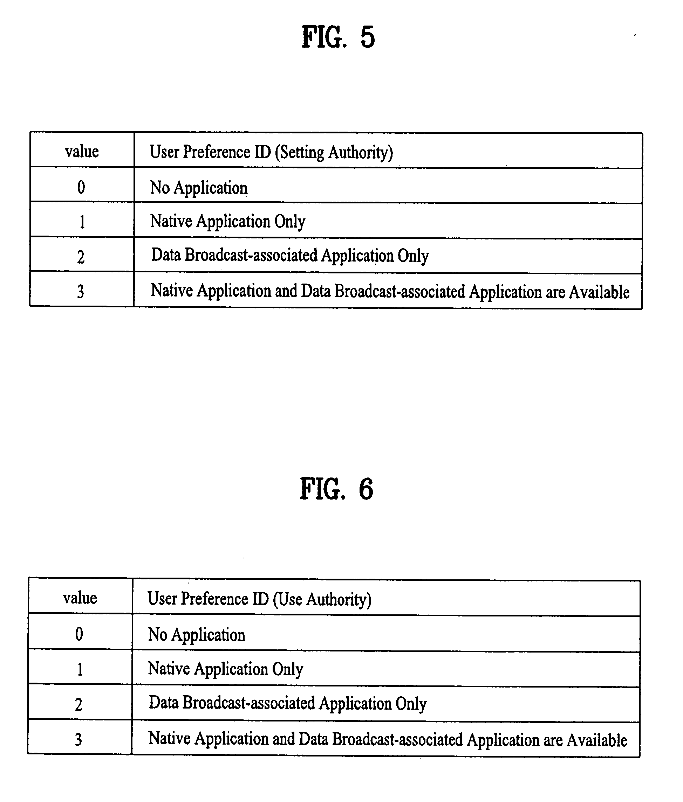

FIG. 5 shows still another example of a User Preference Table according to the present invention.

FIG. 6 shows still another example of a User Preference Table according to the present invention.

A method for constructing the User Preference Table according to the present invention will hereinafter be described with reference to FIGS. 2 to 6.

The above-mentioned User Preference Table 208 may include information associated with functions supplied from the application, information indicating which application has an authority to establish a specific function contained in the above-mentioned functions, and information indicating which application has an authority to actually apply a predetermined specific function.

In more detail, as an example of the method for constructing the User Preference Table 208, a table including a variety of members (i.e., "User Preference ID", "User Preference Value", "User Preference Setting Authority", and "User Preference Use Authority") may be configured. However, it should be noted that the names of the above-mentioned members are disclosed for only illustrative purposes.

The "User Preference ID" is indicative of a value (i.e., a type or a member) for designating categories of functions supplied from the application.

The "User Preference ID" may be denoted by FIG. 3. If more functions exist, the ID value may be set to 11 or higher as necessary.

The "User Preference Value" is indicative of a value (i.e., a type or a member) for designating a variety of setup values associated with a specific function. For example, if the "User Preference ID" is set to zero "0" (i.e., if the "User Preference ID" is indicative of an aspect ratio function), preferred embodiments shown in FIG. 4A may be displayed.

In the meantime, if the "User Preference ID" is set to "1" (i.e., if the "User Preference ID" is indicative of a Closed Caption function), preferred embodiments shown in FIG. 4B may be displayed.

If the "User Preference ID" is set to "2" (i.e., if the "User Preference ID" is indicative of an Analog Closed Caption Service function), preferred embodiments shown in FIG. 4C may be displayed.

If the "User Preference ID" is set to "3" (i.e., if the "User Preference ID" is indicative of a Digital Caption Service function), preferred embodiments shown in FIG. 4D may be displayed.

If the "User Preference ID" is set to "4" (i.e., if the "User Preference ID" is indicative of a Closed Caption Font Type), preferred embodiments shown in FIG. 4E may be displayed.

If the "User Preference ID" is set to "5" (i.e., if the "User Preference ID" is indicative of a Closed Caption Font Size), preferred embodiments shown in FIG. 4F may be displayed.

If the "User Preference ID" is set to "6" (i.e., if the "User Preference ID" is indicative of a Closed Caption Text Color function), preferred embodiments shown in FIG. 4G may be displayed.

If the "User Preference ID" is set to "7" (i.e., if the "User Preference ID" is indicative of a Closed Caption Background Color function), preferred embodiments shown in FIG. 4H may be displayed.

If the "User Preference ID" is set to "8" (i.e., if the "User Preference ID" is indicative of an Audio Language function), preferred embodiments shown in FIG. 4I may be displayed.

If the "User Preference ID" is set to "9" (i.e., if the "User Preference ID" is indicative of a Parental Control function), preferred embodiments shown in FIG. 4J may be displayed.

If the "User Preference ID" is set to "10" (i.e., if the "User Preference ID" is indicative of a User Language function), preferred embodiments shown in FIG. 4K may be displayed.

The "User Preference Setting Authority" is indicative of a table for indicating an ID of an application having an authority to change the above-mentioned "User Preference Value". Although only a distinction between the Native application and the data broadcast-associated application is considered in FIG. 5, detailed data broadcast-associated applications (such as the execution management application) may also be displayed as necessary.

The "User Preference Use Authority" is indicative of a table indicating an ID of an application having an authority to apply the above-mentioned "User Preference Value". Although only a distinction between the Native application and the data broadcast-associated application is considered in FIG. 6, detailed data broadcast-associated applications (such as the execution management application) may also be displayed as necessary.

The "User Preference Setting Authority" may be designed to be equal to the "User Preference Use Authority" as necessary.

However, a process for establishing a specific function and the other process for applying the established specific function may sequentially occur at intervals of a predetermined time. Also, it is preferable that an application having an authority is determined according to environments of the process-occurrence time. It is preferable that the "User Preference Setting Authority" and the "User Preference Use Authority" are defined separately from each other.

[Third Preferred Embodiment]

A method for allowing the data broadcast-associated application, the data broadcast-associated application platform, or the Native application to access the above-mentioned User Preferable Table, and an AppUserPreference library for controlling the above-mentioned User Preference Table will hereinafter be described with reference to FIGS. 2 to 6.

A new library 209 is supplied to the data broadcast-associated application platform 204, such that the data broadcast-associated application 202 can access the above-mentioned User Preference Table 208. The term "AppUserPreference" may be used as a name of the above-mentioned new library, and it should be noted that the above-mentioned name "AppUserPreference" is disclosed for illustrative purposes.

If a specific application uses the above-mentioned AppUserPreference library 209, at least one of the following four authorities may exist.

The first authority is indicative of a readUserPreferencePermission authority for reading content data of the User Preference Table.

The second authority is indicative of a writeUserPreferencePermission authority for updating content data of the User Preference Value.

The third authority is indicative of a request User Preference Setting Authority Update Permission authority for requesting the update of content data of the User Preference Setting Authority.

The fourth authority is indicative of a requestUserPreferenceUseAuthorityUpdatePermission authority for requesting the update of content data of the User Preference Use Authority.

However, although the first authority has been defined as a single authority, different authorities may also be assigned to individual items (i.e., Value, Setting Authority, and Use Authority) of the User Preference Table 208 as necessary.

The third and fourth authorities are adapted to request the update of data. A specific application cannot arbitrarily change the Setting Authority item of the User Preference Table 208 and the Use Authority item, but it may request the change of the above-mentioned items.

A method for assigning the first to fourth authorities to the data broadcast-associated application 202 may be arbitrarily determined.

Preferably, the execution management application 203 may have all of the first to fourth authorities, and other data broadcast-associated applications other than the execution management application 203 may have the first authority or the second authority.

In the meantime, the Native application 207 may have all of the first to fourth authorities.

The reason why all authorities are not assigned to other data broadcast-associated applications other than the execution management application 203 is to prevent the number of negotiation events from being excessively generated on the condition that only the execution management application 203 and the Native application 207 are established to have negotiation authorities.

The AppUserPreference library 209 determines whether each calling application has a corresponding authority in association with each Method defined in the AppUserPreference library 209. If it is determined that the calling application does not have the authority to use the corresponding Method, the corresponding call command is thrown away or discarded.

Individual Methods of the above-mentioned AppUserPreference library 209 will be described with reference to the following fourth preferred embodiment.

The Native application 207 is not written in Java language, and is not designed to be operated on the data broadcast-associated application platform 204. Provided that the Native application is written in C or C++ language instead of the Java language, the Native application can access the User Preference Table 208 without using the AppUserPreference library 209.

However, it is preferable that a method for operating the User Preference Table 208 of the Native application 207 is defined to be equal to a method for implementing the AppUserPreference library 209. If the method for operating the User Preference Table 208 is defined to be different from the method for implementing the AppUserPreference library 209, unexpected errors may occur in the process for allowing the data broadcast-associated application 202 and the Native application 207 to access/update the User Preference Table 208.

In the meantime, the execution management application 203 may be designed to be fully aware of functions of other data broadcast-associated applications.

For example, it is preferable that the execution management application 203 be designed to be fully aware of first information indicating whether an aspect ratio setup can be changed to another aspect ratio setup by the execution management application 203 itself or other data broadcast-associated applications, or second information indicating whether an aspect ratio setup can be applied, after the channel switching, by the execution management application 203 itself or other data broadcast-associated applications.

If the execution management application 203 is not designed as described above, the execution management application 203 requires an additional process for inspecting categories of functions owned by other data broadcast-associated applications 202 during the execution of its functions.

In the meantime, provided that the execution management application 203 and the Native application 207 have the authorities to request the changes of "User Preference Setting Authority" and "User Preference Use Authority", a method for arbitrating between the execution management application 203 and the Native application 107 is a matter of grave concern.

For example, in the case where a specific function is supported by only the Native application 207 and is not supported by the data broadcast-associated application 202, the "User Preference Setting Authority" is set to "1" and the "user Preference Use Authority" is set to "1" as shown in FIGS. 5~6. In other words, only the Native application 207 has the authority to set/use the specific function.

However, if the Native application 207 and the data broadcast-associated application 202 support the same function, the above-mentioned AppUserPreference library 209 can be implemented with three types.

If the Native application 207 and the data broadcast-associated application 202 request the authority, the Native application 207 is designed to set a corresponding function at all times, the data broadcast-associated application 202 is designed to set the corresponding function at all times, or the AppUserPreference library 209 is established to allow a user to select a specific application via a GUI image.

However, the GUI image may be implemented with the Native application 207.

In brief, the above-mentioned AppUserPreference library 209 executes a specific function capable of arbitrating several applications which desire to read/update content data of the User Preference Table 208.

In more detail, the above-mentioned AppUserPreference library 209 is designed to have at least one of the following first to third functions.

The first function allows a specific application to request the "User Preference Setting Authority" and the "User Preference Use Authority" in light of functions of the specific application.

The second function is able to change content data of the User Preference Table upon receiving a request from a specific application.

The third function is able to inform associated applications of information indicating that content data of the User Preference Table is changed to another data upon receiving a request from a specific application.

If the above-mentioned associated applications desire to recognize the changed content data of the corresponding User Preference Table 208, it is preferable that a listener may be registered via the above-mentioned AppUserPreference library 209.

In this case, if the User Preference Table 208 is changed, the AppUserPreference library 209 calls the registered listeners, such that it provides the associated applications with information indicating that the User Preference Table 208 has been changed to another.

[Fourth Preferred Embodiment]

An example of the Method of the AppUserPreference library according to the present invention will hereinafter be described with reference to FIGS. 2 to 6.

The following Methods are disclosed for illustrative purposes of individual functions and titles, such that they must be understood on the basis of detailed descriptions of the present invention.

Firstly, the AppUserPreference library 209 may have the following Class Hierarchy:

java.lang.object
l+--- org.dvb.application.AppUserPreference

The AppUserPreference library 209 may have the following Method. For the convenience of description and better understanding of the present invention, the Method will be described in the form of a function "method(parameters);".The function "method(parameters);" is as follows.

Public void requestUserPreferenceSettingAuthority(USER_PREFERENCE_ID preferenceID);

The above-mentioned Method is used when a predetermined application requests a Setting Authority associated with a specific function (preferenceID).

However, the above-mentioned specific function (preferenceID) may be set to one of values shown in FIG. 3. If an application having requested the call has no authority to request the Setting Authority, an unexpected error (java.lang.SecurityException) is thrown away.

[Method]

public void requestUserPreferenceUseAuthority(USER_PREFERENCE_ID preferenceID);

The above-mentioned Method is used when a predetermined application requests the Use Authority associated with a specific function (preferenceID).

However, the above-mentioned specific function (preferenceID) may be set to one of values shown in FIG. 3. If an application having requested the call has no authority to request the Use Authority, an unexpected error (java.lang.SecurityException) is thrown away.

[Method]

public USER_PREFERENCE_VALUE readUserPreferenceValue(USER_PREFERENCE_ID preferenceID);

The above-mentioned Method is used when a predetermined application desires to read a value established for the specific function (preferenceID).

However, the above-mentioned specific function (preferenceID) may be set to one of values shown in FIG. 3.

In the meantime, the Return Value is differently established according to the above-mentioned specific function (preferenceID). For example, if the "PreferenceID" value is set to the value of "1" (i.e., if the Closed Caption function is selected as shown in FIG. 3), the Return Value may be set to one of values shown in FIG. 4B.

The Return Value may be indicative of a specific value for returning the processed result associated with factors of the function.

For example, the Return Value may also correspond to the User Preference Value.

If the application having requested the call has no authority to read the above-mentioned value, an unexpected error (java.lang.SecurityException) is thrown away.

[Method]

public USER_PREFERENCE_SETTING_AUTHORITY readUserPreferenceSettingAuthority(USER_PREFERENCE_ID preferenceID);

The above-mentioned Method is used when a predetermined application desires to recognize which application has the Setting Authority associated with the specific function (preferenceID).

However, the above-mentioned specific function (preferenceID) may be set to one of values shown in FIG. 3. In the meantime, the Return Value may be set to one of values shown in FIG. 5.

If an application having requested the call has no authority to read the above-mentioned value, an unexpected error (java.lang.SecurityException) is thrown away.

[Method]

public USER_PREFERENCE_USE_AUTHORITY readUserPreferenceUseAuthority(USER_PREFERENCE_ID preferenceID);

The above-mentioned Method is used when a predetermined application desires to recognize which application has the Use Authority associated with the specific function (preferenceID).

However, the above-mentioned specific function (preferenceID) may be set to one of values shown in FIG. 3. In the meantime, the Return Value may be set to one of values shown in FIG. 6.

If an application having requested the call has no authority to read the above-mentioned value, an unexpected error (java.lang.SecurityException) is thrown away.

[Method]

public void writeUserPreferenceValue(USER_PREFERENCE_ID preferenceID, USER_PREFERENCE_VALUE preferenceValue);

The above-mentioned Method is used when a predetermined application desires to change the specific function (preferenceID) to another value.

However, the above-mentioned specific function (preferenceID) may be set to one of values shown in FIG. 3.

In the meantime, the "PreferenceID" is differently established according to the above-mentioned specific function (preference ID). For example, if the "Preference ID" is set to the value of "1" (i.e., if the Closed Caption function is selected as shown in FIG. 3), the "preferenceValue" may be set to one of values shown in FIG. 3B.

If an application having requested the call has no authority to read the above-mentioned value, an unexpected error (java.lang.SecurityException) is thrown away.

[Method]

public void addUserPreferenceListener(AppUserPreferenceListener, preferenceListener);

If a predetermined application desires to recognize changed data (e.g., Value, Setting Authority, and Use Authority, etc.) associated with the specific preference ID, a listener may be registered using the above-mentioned Method.

If the application having requested the call has no authority to register the above-mentioned listener (i.e., if the application has no authority to read content data of the User Preference Table), an unexpected error (java.lang.SecurityException) is thrown away.

The above-mentioned "AppUserPreferenceListener" serves as a Lister interface for tracking changed data of the above-mentioned AppUserPreference data, and is defined as follows.

[AppUserPreferenceListener]

public interface AppUserPreferenceListener extends java.util.EventListener;

In the meantime, the above-mentioned AppUserPreferenceListener may have the following Method.

[Method]

public void appUserPreferenceChanged(USER_PREFERENCE_ID preferenceID);

For example, if the Value, the Setting Authority, and the Use Authority in association with the specific function (preferenceID) are changed to others, the above-mentioned function is called.

However, the above-mentioned specific function (preferenceID) may be set to one of values shown in FIG. 3.

[Fifth Preferred Embodiment]

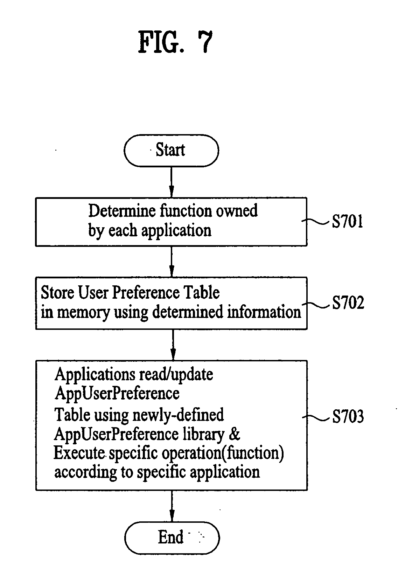

FIG. 7 is a flow chart illustrating a method for controlling a user's preference option of a broadcast receiver capable of receiving data broadcasting according to the present invention.

A method for controlling the broadcast receiver according to the present invention will hereinafter be described with reference to FIG. 7 and FIGS. 2~6.

The broadcast receiver determines functions of the data broadcast-associated application 202 and the Native application 207 at step S701.

The Native application 207 may directly communicate with the User Preference Table 208, but the data broadcast-associated application 202 can communicate with the User Preference Table 208 via the AppUserPreference library 209.

The User Preference Table 208 and the AppUserPreference library 209 have been fully described in the first to fourth preferred embodiments, such that their detailed description will herein be omitted for the convenience of description.

The broadcast receiver stores the User Preference Table 208 in a memory using the determined information at step S702. The User Preference Table 208 may be implemented in the form of FIGS. 3 to 6. However, the User Preference Table 208 may be initially set to a default value.

The applications access the User Preference Table 208 using the AppUserPreference library 209, read/update a specific value using the AppUserPreference library 209, and implement a specific function of the broadcast receiver at step S703.

[Sixth Preferred Embodiment]

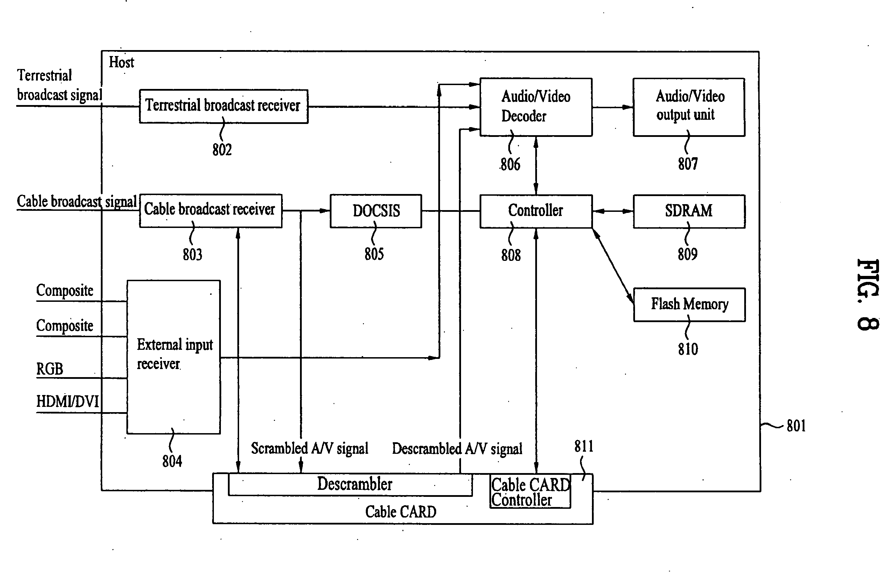

FIG. 8 is a block diagram illustrating a broadcast receiver equipped with a user's preference option control function according to the present invention.

A broadcast receiver for controlling a user's preference option according to the present invention will hereinafter be described with reference to FIG. 8 and FIGS. 2~7.

The broadcast receiver 801 according to the present invention includes a terrestrial broadcast receiver 802, a cable broadcast receiver 803, an external input receiver 804, a DOCSIS 805, an Audio/Video (A/V) decoder 806, an A/V output unit 807, a controller 808, an SDRAM 809, a flash memory 810, and a cable card 811, etc.

In this case, the broadcast receiver 801 may be a digital TV (DTV) capable of receiving cable broadcast data, or an iDCR (bi-directional Digital Cable Ready) TV.

The most important function of the cable card 811 is to descramble password(s) of scrambled cable broadcast signal(s).

In order to support bi-directional communication (also called two-way communication), the cable broadcast receiver 803 includes an In-band tuner for receiving a Quadrature Amplitude Modulation (QAM) signal and an Out Of Band (OOB) Tuner for receiving a Quadrature Phase Shift Keying (QPSK) signal, and additionally includes a DOCSIS modem, such that it supports the bi-directional communication using the OOB tuner and the DOCSIS modem according to a signal of the cable card 811 and a selection command of the cable broadcast enterprise.

The terrestrial broadcast receiver 802 receives a Vestigial SideBand (VSB) signal, demodulates the received VSB signal, converts the demodulated result into a digital signal, and transmits the digital signal to the A/V decoder 806. However, it should be noted that a video decoder contained in the A/V decoder 806 may be an MPEG video decoder, and an audio decoder contained in the A/V decoder 806 may be an AC3 audio decoder.

The cable broadcast receiver 803 includes two tuners, i.e., an In-band tuner and an OOB tuner. Specifically, the above-mentioned In-band tuner receives only the QAM signal, and the OOB tuner receives the QPSK or QAM signal.

In this case, the QAM signal received via the In-band tuner includes audio information, video information, or data broadcast information. The audio information and the video information may be scrambled or unscrambled. The QAM signal is applied to the cable card 811 irrespective of its scrambled or unscrambled state, undergoes the descrambling process, and the descrambled result is applied to the A/V decoder 806.

In the meantime, the cable card 811, the controller 808, and the cable headend perform bi-directional communication using the QAM/QPAK signal received via the OOB tuner and the DOCSIS modem.

For example, the controller 808 can be implemented with a microprocessor (MICOM) or a CPU, etc.

A detailed description of the broadcast receiver shown in FIG. 8 will hereinafter be described.

The Native application 207, the data broadcast-associated application platform 204, a driver for controlling hardware units 206 (e.g., a tuner), and other necessary software programs are stored in the flash memory 810. In this case, the flash memory 810 is used as an example, and other memory capable of storing data may also be used as necessary.

If the broadcast receiver 801 is powered on, software programs stored in the flash memory 810 are transferred to the SDRAM 809 according to a control signal of the controller 808, and are executed.

In this case, the SDRAM (Synchronous Dynamic Random Access Memory) 809 is used as an example, and other memory capable of storing data may also be used as necessary.

In the meantime, the broadcast station transmits the data broadcast-associated application 202 via the data broadcast mode, the transmitted data broadcast-associated application 202 is stored in the SDRAM 809, and is then executed.

Needless to say, in order to prevent the same data broadcast-associated application 202 from being downloaded whenever the broadcast receiver 201 or 801 is powered on, the data broadcast-associated application 202 may also be stored in the flash memory 810.

The User Preference Table 208 and the AppUserPreference library 209 may be stored in the SDRAM 809 or the flash memory 810.

However, the difference between data stored in the SDRAM 809 and data stored in the flash memory 810 has been disclosed in the first preferred embodiment.

In this case, the controller 808 determines which one of applications has the Setting/Use Authorities associated with the specific function using the User Preference Table 208 stored in the SDRAM 809 or the flash memory 810.

The data broadcast-associated application 202, the execution management application 203, the Native application 207, the User Preference Table 208, and the AppUserPreference library 209 are stored in the flash memory 810 or the SDRAM 809, such that they are operated according to a control signal of the controller 808. Also, the controller 808 controls the broadcast receiver 801 to execute a specific operation according to a specific application.

Detailed operations have been fully described in FIGS. 2 to 7, such that their detailed description will herein be omitted for the convenience of description.

As apparent from the above description, a method for managing the option of user's preference in a broadcast receiver capable of receiving data broadcasting, a class/interface structure for controlling the same, and a broadcast receiver for controlling the class/interface structure according to the present invention provide a specific function with the data broadcast-associated application and the Native application, establish/apply the specific function even when only the Native application is supported, and prevent an unexpected error from being generated.

It should be noted that most terminology disclosed in the present invention is defined in consideration of functions of the present invention, and can be differently determined according to intention of those skilled in the art or usual practices. Therefore, it is preferable that the above-mentioned terminology be understood on the basis of all contents disclosed in the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

It will be appreciated that, in various of the above-disclosed and other features and functions, or alternatives thereof, may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process or data structure can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardwre designed to perform the method, or any combination of such hardware, firmware and sofrware elements.

It will be appreciated that various the above-disclosed and other features and functions, or alternatives thereof, may be desirably combined into many other different devices or applications. Also, various presently unforeseen or unanticipated alternatives, modifications, variations or improvements therin may be subsequently made by those skilled in the art, and are also intended to be encompassed by the following claims.

## Claims

1. A method comprising the steps of:
receiving a request for setting a function, wherein the function is supported by at least one of a data broadcast-associated application and an application native to a broadcast receiver;
accessing setting authority information in response to the request; and
storing data associated with the function based on the setting authority information.

2. The method of claim 1, wherein the step of storing data associated with the function comprises the step of storing data corresponding to the native application if the native application is the only application the supports the function.

3. The method of claim 1, wherein the step of storing data associated with the function comprises the step of storing data corresponding to the data broadcast-associated application if the data broadcast-associated application is the only application the supports the function.

4. The method of claim 1, wherein the step of storing data associated with the function comprises the step of storing data corresponding to one of the data broadcast-associated application and the native application if the native application and the data broadcast-associated application both support the function.

5. The method of claim 4, further comprising the step of establishing setting authority based on user selection.

6. A method comprising the steps of:
receiving a request for applying a function, wherein the function is supported by at least one of a data broadcast-associated application and an application native to a broadcast receiver;
accessing applying authority information in response to the request; and
applying data associated with the function based on the applying authority information.

7. The method of claim 6, wherein the step of applying data associated with the function comprises the step of applying data corresponding to the native application if the native application is the only application the supports the function.

8. The method of claim 6, wherein the step of applying data associated with the function comprises the step of applying data corresponding to the data broadcast-associated application if the data broadcast-associated application is the only application the supports the function.

9. The method of claim 6, wherein the step of applying data associated with the function comprises the step of applying data corresponding to one of the data broadcast-associated application and the native application if the native application and the data broadcast-associated application both support the function.

10. The method of claim 9, further comprising the step of establishing applying authority based on user selection.

11. A broadcast receiver comprising:
a controller configured to receive a request for setting a function, wherein the function is supported by at least one of a data broadcast-associated application and an application native to a broadcast receiver;
the controller further configured to access setting authority information in response to the request; and
the controller further configured to store data associated with the function based on the setting authority information.

12. The broadcast receiver of claim 11, wherein the controller is configured to store data corresponding to the native application if the native application is the only application the supports the function.

13. The broadcast receiver of claim 11, wherein the controller is configured to store data corresponding to the data broadcast-associated application if the data broadcast-associated application is the only application the supports the function.

14. The broadcast receiver of claim 11, wherein the controller is configured to store data corresponding to one of the data broadcast-associated application and the native application if the native application and the data broadcast-associated application both support the function.

15. The broadcast receiver of claim 14, wherein the controller is configured to establish setting authority based on user selection.

16. The broadcast receiver of claim 11, wherein the data broadcast-associated application includes an Open Cable Application Platform (OCAP) application

17. A broadcast receiver comprising:
a controller configured to receive a request for applying a function, wherein the function is supported by at least one of a data broadcast-associated application and an application native to a broadcast receiver;
the controller further configured to access applying authority information in response to the request; and
the controller further configured to apply data associated with the function based on the applying authority information.

18. The broadcast receiver of claim 17, wherein the controller is configured to apply data corresponding to the native application if the native application is the only application the supports the function.

19. The broadcast receiver of claim 17, wherein the controller is configured to apply data corresponding to the data broadcast-associated application if the data broadcast-associated application is the only application the supports the function.

20. The broadcast receiver of claim 17, wherein the controller is configured to apply data corresponding to one of the data broadcast-associated application and the native application if the native application and the data broadcast-associated application both support the function.

21. The broadcast receiver of claim 20, wherein the controller is configured to establish applying authority based on user selection.

22. The broadcast receiver of claim 17, wherein the data broadcast-associated application includes an Open Cable Application Platform (OCAP) application.
